# EUROPEAN PATENT SPECIFICATION

(11) **EP 0 595 643 B1**
(45) Date of publication and mention of the grant of the patent: **27.11.1996**
(21) Application number: 93308646.4
(22) Date of filing: 29.10.1993
(51) Int. Cl.: B62B 3/00, E05D 5/02, E05D 11/10

(54) **Goods container**
Warenbehälter
Conteneur pour marchandises

(30) Priority: 30.10.1992 GB 9222794
(43) Date of publication of application: 04.05.1994
(60) Divisional application: 96107042.2
(73) Proprietor: ELOPAK SYSTEMS AG, CH-8152 Glattbrugg (CH)
(72) Inventor: Hagelberg, Harry, SF-00250 Helsinki (FI); Matoniemi, Markku, SF-04400 Järvenpää (FI)
(74) Representative: Burrows, Anthony Gregory

(56) References cited:
- EP-A- 0 192 889
- EP-A- 0 386 342
- FR-A- 2 286 065
- GB-A- 2 024 735
- GB-A- 2 052 400
- GB-A- 2 076 463
- GB-A- 2 101 963
- US-A- 4 159 831
- US-A- 4 974 523

## Description

This invention relates to a goods container.

Roll containers of various forms are known from, for example, EP-A-0192889; FR-A-2286065; GB-A-2024735; GB-A-2052400 and US-A-4159831.

EP-A-0192889 discloses a roll container in which a rear pair of ground rolls are mounted on a rearward part of a wire mesh base wall to which rearward part a forward part is hinged so as to be turnable upwardly and rearwardly into a nesting position. Fixed to the rearward part of the base wall is a vertical rear wall to respective opposite vertical edges of which are hinged respective vertical lateral walls, which carry respective front castor rolls and to the front edge of one of which is hinged a vertical front wall constituting a front gate. The lateral walls can be disengaged from the forward part of the base wall and swung outwards a limited extent into nesting positions. Each of the four vertical walls consists of a tubular metal frame infilled with horizontal wires. Distributed at regular vertical spacings from each other and from the base wall are pairs of shelves. The shelves of each pair are hingedly mounted on the insides of the respective lateral walls so as to be turnable upwardly from respective horizontal goods-bearing positions into respective vertical retracted positions in which they are face-to-face with the respective lateral walls. Each shelf consists of wire mesh, with a laterally outermost wire of the mesh forming a hinge pin borne in holes in the vertical tubes of the frame of the supporting lateral wall. A helical compression spring encircling that hinge pin near its front end acts between the front vertical tube of the frame and a collar on the hinge pin to urge the pin rearwardly. For each shelf, there is fixed to the rear vertical tube of the frame of the lateral wall at a location above the hole bearing the rear end zone of the hinge pin a projecting detent behind which the rear of the shelf engages to retain the shelf in its vertical position. The shelf is supported in its horizontal, i.e. goods-bearing, position by a forwardly-protruding horizontal wire fixed across the inside of the rear wall. Disadvantages of this arrangement are the number of items required to obtain the resilience and the retention in at least the vertical position.

GB-A-2052400 discloses a roll container in which pairs of wire mesh shelves are arranged at respective levels, but the shelves of each pair have their horizontal hinge wires extending transversely of the roll container at a location half-way forwards from the rear wall. The ends of the hinge wires are borne in short vertical slots in small, part-circular, hinge plates fixed to the lateral walls and extending in the planes of the lateral walls. Formed in the arcuate edge of each hinge plate at respective locations directly above the two vertical slots in the plate are two notches arranged to detain respective horizontal stub pins fixed to adjacent lateral edges of the shelves of the pair. The shelves are releasably retained in vertical positions by engagement of the stub pins in the notches under the weights of the shelves. A disadvantage of this arrangement is that a careless user can damage the shelves and/or the hinge plate by attempting to lower the shelves without first lifting the shelves to lift the stub pins from the notches.

EP-A-0386342 discloses a swing door, especially in a shower screen, in which a door leaf is mounted on a door post by way of upper and lower drag bearings. Each bearing includes a moving part including a vertical bearing pin mounted on the door and a fixed part including a holed bearing block fixed to the door post, or vice-versa. The lower bearing differs from the upper bearing in having a snap latching characteristic. This is provided by the moving part and the fixed part of the lower bearing each further including four circumferentially-arranged latching bevels. When the latching bevels of the moving part are pressed against the latching bevels of the fixed part, which occurs under the weight of the door leaf, they are cammed into their latching condition. The latching position of the door leaf relative to the door post can be adjusted by adjusting the angular orientation of the fixed latching bevels about the axis of the bearing pins, using a set screw. This arrangement will not operate unless the hinge axis is at a significant angle to the horizontal.

It is conventional for a front gate of a roll container to be hingedly mounted on one lateral wall by way of a hinge pin welded to brackets themselves welded to the front vertical tube of the frame of the one lateral wall, and to include a latching member arranged to co-operate with a fixed latching hook welded to the outside of the front vertical tube of the frame of the other lateral wall. This arrangement can be unattractive in appearance and difficult to clean.

FR-A-2286065 discloses a roll container in which front, rear and lateral walls each consist of a tubular metal frame infilled with horizontal and vertical wires. A latching device for the front gate consists of, on the one hand, a latching loop welded to the adjacent vertical tube of the front gate and, on the other hand, a latching hook housed in a cavity in the front vertical tube of the adjacent lateral wall. The latching loop is of such dimensions and form that it can engage the latching hook and yet permit its movement and in consequence the movement of the adjacent lateral wall towards and away from the front gate.

It is conventional for shelf wires of a roll container to be of lacquered, galvanised steel. With heavy use, it is not unusual for the lacquer to be worn away and thus the steel exposed to chemical attack, for example by lactic acid in the case of milk roll containers.

US-A-4159831 discloses a roll container corresponding to the preamble of claim 1 in which the shelves are of sheet form. Each shelf is moulded from plastics and includes a lip which projects both upwardly and downwardly to retain both the lower portions of goods on the shelf itself and the upper portions of goods on the shelf below. The imperforate form of the shelf means that it tends to be heavy and difficult to clean.

GB-A-2024735 discloses a roll container wherein the rear wall has at its vertical edges respective forwardly-projecting flanges to which lateral walls are hinged. The upper edges of the rear wall and the flanges are integrally interconnected by a connecting strip to obtain a more rigid construction. Mounted upon the lower edges of the rear wall and the flanges are two feet, upon which rests a base wall. Guides on the insides of the flanges and the lateral walls support a rearwardly collapsible shelf in the form of a grill consisting of a plurality of equal panels pivotally connected to each other. The rear wall and its flanges, the connecting strip and the lateral walls are made of plastics by injection-moulding. The plastics may be foam plastics, but this is relatively easily damaged and is relatively bulky for its strength.

According to the present invention, there is provided a goods container including a support and a plurality of shelves made of plastics and supported by said support, characterized in that said shelves are regularly perforated and said plastics is high-performance, non-foam, engineering plastics reinforced with other material.

Such perforate shelves of high-performance, reinforced, non-foam, engineering plastics have the advantages that they are relatively compact, relatively resistant to mechanical damage and relatively easy to clean.

The shelf is reinforced with steel or other material. The plastics employed is preferably glass-fibre-reinforced thermoplastics.

In a preferred embodiment, each shelf is turnable about an axis between a projected condition and a retracted condition, a resilient member is located axially adjacent one end of the shelf and disposed between the shelf and the support, a protrusion protrudes from one of the shelf and the resilient member, and a recess is provided in the other of the shelf and the resilient member for receiving the protrusion to locate the shelf in a desired condition of turning relative to the support, the resilient member being able to yield resiliently axially to enable the shelf to be turned out of said desired condition.

Such resilient member has the advantage that it can be relatively cheap and can be easy to assemble with the shelf and the support.

It may be a unitary, plate-form member of resilient plastics or spring steel. For each shelf, the protrusion and the recess may be in the form of a radial rib and a radial groove. More than one such protrusion and/or recess may be formed in order to define a plurality of conditions of turning of the shelf relative to the support, for example a vertical condition and a horizontal condition. The or each protrusion is preferably formed on the shelf, with the or each recess being formed in the resilient member.

In the preferred embodiment, the goods container includes a frame tube and a fitting supported by the tube, a unitary mounting bracket being situated and fixed in the frame tube at an opening through the wall of the tube, and the fitting being mounted on the bracket.

This arrangement provides a particularly cheap and simple way of mounting a fitting upon the frame tube. Moreover, use of a unitary mounting bracket, rather than of individual bracket parts welded on or in the frame tube is more attractive and more hygienic.

The bracket may be fixed in a front tubular upright of a tubular frame of a lateral wall of the goods container and may mount a latching hook or a hinge pivot for a front gate of the goods container.

The unitary mounting bracket may be of metal, for example aluminium, or plastics and may be fixed in the frame tube by means of rivets, screws, nuts-and-bolts, or claws punched from the tube wall.

In order that the invention may be clearly understood and readily carried to effect, reference will now be made, by way of example, to the accompanying drawings, in which:
Figure 1 shows a front perspective view of a roll container with a front gate thereof fully open,
Figure 2 shows a top plan view of one of six identical shelves of the roll container,
Figure 3 shows a fragmentary front elevation of a latching region of the roll container,
Figure 4 is a fragmentary side elevation of that region,
Figure 5 is a fragmentary front elevation of a hinging region of the roll container,
Figure 6 is a lateral perspective view of a shelf-mounting region of the roll container,
Figure 7 shows an axial elevation of a resilient member in that shelf-mounting region, and
Figure 8 shows a partial section taken on the line VIII-VIII of Figure 7.

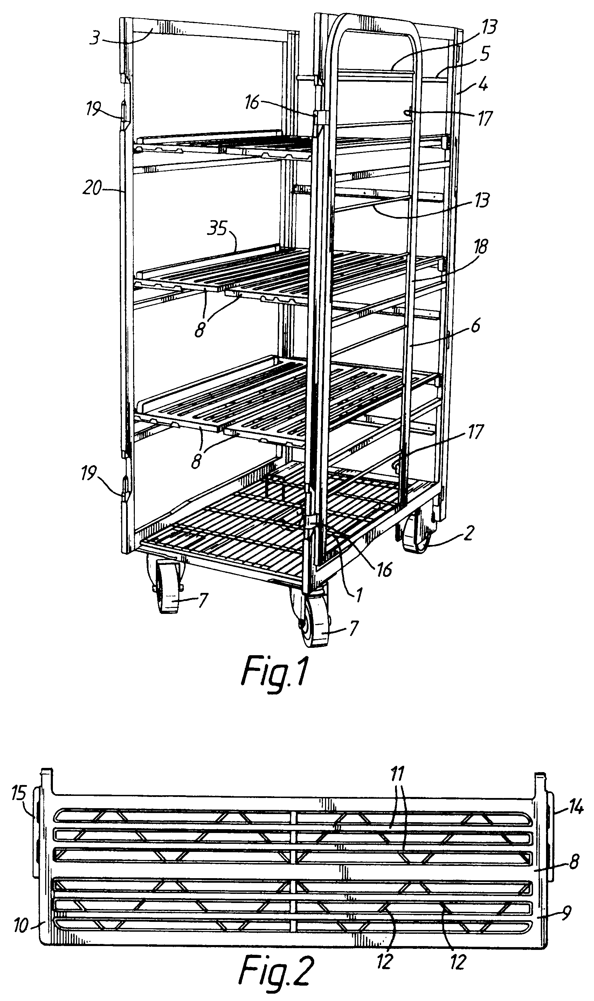

Referring to the drawings, the roll container comprises a base 1, two rear ground wheels 2 mounted upon the base 1, four side walls consisting of two lateral walls 3 and 4, a rear wall in the form of a vertically displaceable gate 5, a front wall in the form of a gate 6 turnable about a vertical axis at the front of the wall 4, two front wheels 7 mounted upon the respective lateral walls 3 and 4, and three pairs of shelves 8 arranged at respective levels above the base 1. A forward part of the base 1 takes the form of a shelf liftable about a transverse horizontal axis into a retracted position against the rear wall 5. The shelves 8 of each pair are mounted upon the respective lateral walls 3 and 4 in such a manner as to be turnable about respective horizontal axes from respective horizontal projecting positions shown in Figure 1 to respective retracted positions in which they extend substantially vertically upwards substantially in the planes of the respective walls 3 and 4. Each shelf 8 is moulded of plastics, in this case high-performance, glass-fibre-reinforced, engineering thermoplastics (for example polypropylene or polyarylamide). It consists of front and rear bars 9 and 10 interconnected by longitudinal bars 11 with transverse bracing 12. The front and rear walls 6 and 5 include horizontal steel wires 13 upon some of which the shelves may rest in their horizontal conditions by way of forward and rearward plastics flanges 14 and 15 extending from the bars 9 and 10. In each shelf 8, the bars 9 and 10 protrude outwardly beyond the radially innermost bar 11 and are there formed with respective aligned pivot bores.

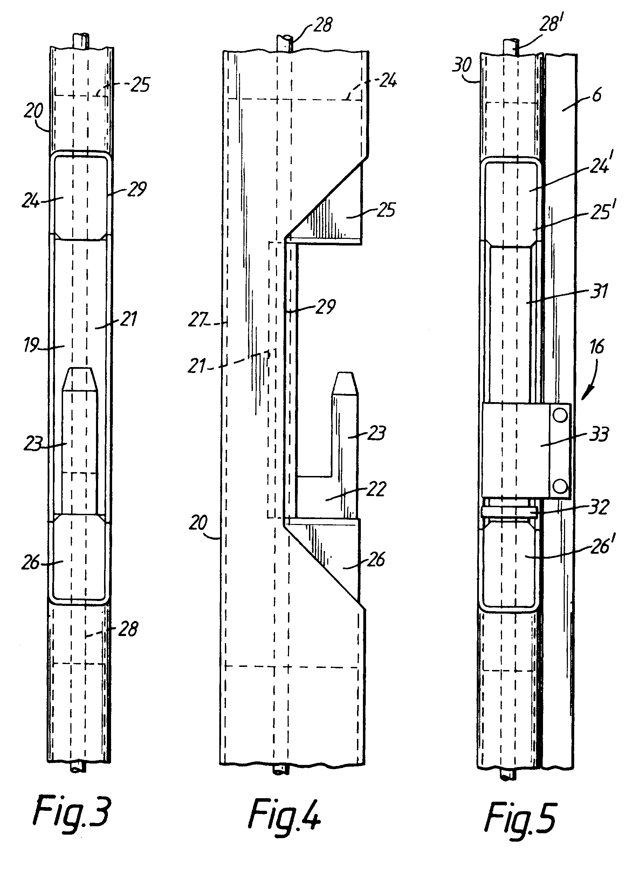

The gate 6 is mounted upon the lateral wall 4 by way of respective upper and lower hinges 16 each as shown in Figure 5. The hinges 16 allow vertical displacement of the gate 6 to a limited extent. The gate 6 is releasably latchable to the lateral wall 3 by engagement of upper and lower steel straps 17 attached to the radially outer tubular upright 18 of a tubular frame of the gate 6 over upper and lower, vertical, steel, latching hooks 19 at the front tubular upright 20 of a tubular frame of the lateral wall 3, each hook 19 being shown in more detail in Figures 3 and 4.

Referring to Figures 3 and 4, each latching hook 19 is substantially L-shaped, with a longer, rear, vertical limb 21, a horizontal limb 22, and a shorter, front vertical limb 23. The hook 19 is fixed in a U-shaped bracket 24 having two short, upper and lower horizontal limbs 25 and 26 and a vertical base 27. The mouth of the U is directed forwardly and receives the hook 19. The U-shaped bracket 24 is made of thermoplastics and its limbs 25 and 26 are formed with respective vertically aligned bores through which extends a steel wire 28 which also extends through a vertical bore through the limb 21 of the hook 19. Thus, the wire 28 holds the hook 19 in position in the mouth of the bracket 24. The upright 20 is cut away at 29 to enable the latching strap 17 to engage over the limb 23. The bracket 24 and the limb 21 are push-fits in the upright 20 and are contained within the original volume of the interior of the upright 20 prior to its being cut away at 29. The bracket 24 may be inserted along the upright 20 to the position shown and then fixed therein by fixing means (not shown), such as rivets, screws, nuts-and-bolts, or claws punched from the wall of the upright 20. Alternatively, if the height of the cut-away 29 is sufficient, the bracket 24 may be introduced into the upright 20 from the front via the cut-away 29 and then fixed in position. The bracket 24 may be introduced into the upright 20 initially with or without the hook 19. If desired, the hook 19 may be attached to the bracket 24 (additionally or alternatively to by means of the wire 28) by means of other fastening means, such as rivets, screws, or nuts-and-bolts. The wire 28 does not need to pass through the hook 19 but, if it does not, then naturally some other means of fixing the hook 19 to the bracket 24 is required.

The wire 28 may be common to both the upper and lower brackets 24 in the upright 20, or separate wires 28 may be provided for the respective brackets 24.

If desired, one or each of the brackets 24 may be fixed in position in the upright 20 through being attached to an end plug (not shown) serving to close the adjacent end of the tubular upright 20.

Referring to Figure 5, each hinge 16 includes a further plastics bracket 24' corresponding to the plastics bracket 24 in the upright 20. The bracket 24' of Figure 5 is a push-fit in a front tubular upright 30 of a tubular frame of the lateral wall 4. A vertical steel wire 28' extends through the bracket 24' but in a more forward position than shown in Figure 4. It is encircled by a thermoplastics hinge tube 31 fitting between the horizontal limbs 25' and 26' of the bracket 24' and formed coaxially at its lower end with an annular flange 32. A steel hinge strap 33 fixed to the gate 6 encircles the tube 31 and normally rests upon the flange 32. The fixing of the bracket 24' in the upright 30 can be in the various manners described for the bracket 24 in the upright 20 in Figures 3 and 4. The wire 28' may again be common to both brackets, or separate wires 28' be provided.

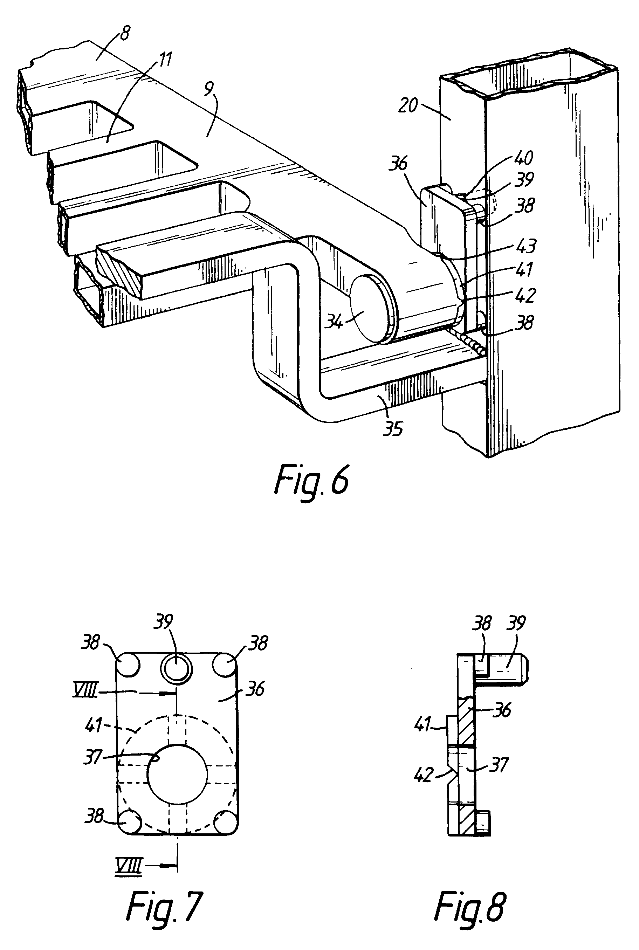

Referring to Figure 6, each end of each shelf 8 is pivotally connected to the adjacent tubular upright (for example 20) of the tubular frame of its lateral wall 3 or 4 by means of a short pivot 34 extending through the pivot bore in the end bar (for example 9) and a bore in the wall of the upright. At about the level of each shelf 8 the lateral wall has a horizontal tube 35 interconnecting the front and rear uprights of that lateral wall and profiled to extend above the level of the horizontal shelf 8 except at the ends of that shelf. The pivot 34 may take the form of a rivet as shown, or of a nut-and-bolt. At one or each end of the shelf 8, the pivot 34 at that end is encircled by a resilient, unitary member 36 formed with a hole 37 (see Figures 7 and 8) through which the pivot 34 extends. The member 36 is of resilient thermoplastics and is of a rectangular plate-like form. It has four short legs 38 at its four corners and projecting towards and abutting the tubular upright. The gap between the middle of the member 36 and the upright 20 provided by the legs 38 permits resilient flexing of the middle relative to the upright. Centrally at its top it includes a horizontal pin 39 extending through a circular aperture 40 in the adjacent wall of the tubular upright, to prevent the member 36 from turning with the shelf 8. The member 36 also includes a ring of lands 41 and radial grooves 42 coaxial with the hole 37. At its surface which bears upon the lands 41, the shelf end is formed with at least one radial rib 43. There are four grooves 42, two of these being vertical and two horizontal. Engagement of the or each rib 43 in one of the grooves 42 retains the.shelf 8 in its vertical or horizontal condition, selectively, but, owing to the resilience of the material of the member 36 and the gap ensured by the legs 38, the shelf 8 can be turned to force the or each rib 43 out of a horizontal or vertical groove 42 into a vertical or horizontal groove 42.

## Claims

1. A goods container including a support (20) and a plurality of shelves (8) made of plastics and supported by said support (20), characterized in that said shelves (8) are regularly perforated and said plastics is high-performance, non-foam, engineering plastics reinforced with other material.

2. A goods container according to claim 1, wherein said other material is steel.

3. A goods container according to claim 2, wherein said other material is glass fibre.

4. A goods container according to any preceding claim, wherein said plastics is polypropylene or polyarylamide.

5. A goods container according to any preceding claim, wherein each shelf (8) is turnable about an axis between a projected condition and a retracted condition, a resilient member (36) is located axially adjacent one end of each shelf (8) and disposed between the shelf (8) and said support (20), a protrusion (43) protrudes from one (8) of the shelf (8) and said resilient member (36) , and a recess (42) is provided in the other (36) of the shelf (8) and said resilient member (36) for receiving said protrusion (43) to locate the shelf (8) in a desired condition of turning relative to said support (20), the resilient member (36) being able to yield resiliently axially to enable the shelf (8) to be turned out of said desired condition.

6. A goods container according to claim 5, wherein each resilient member (36) is a unitary, plate-form member of resilient material.

7. A goods container according to claim 6, wherein each resilient member (36) is formed in the region of its periphery with spacing projections (38), whereby the middle of the resilient member (36) can yield resiliently axially as aforesaid.

8. A goods container according to any one of claims 5 to 7, wherein, for each shelf (8), the protrusion (43) and the recess (42) are in the form of a radial rib (43) and a radial groove (42), respectively.

9. A goods container according to any one of claims 5 to 8, wherein, for each shelf (8), more than one such protrusion (43) and/or recess (42) are formed in order to define a plurality of conditions of turning of the shelf (8) relative to the support (20).

10. A goods container according to any one of claims 5 to 9, wherein a pivot (34) of each shelf (8) extends locatingly through the resilient member (36) and a locating projection (39) extending into a hole (40) in one (20) of the shelf (8) and said support (20) additionally locates said resilient member (36) relative to that one (20) of the shelf (8) and said support (20).

11. A goods container according to any preceding claim and further including a frame tube (30), a unitary mounting bracket (24') situated and fixed in said frame tube (30) at an opening through the wall of the tube (30), and a fitting (31) mounted on said bracket (24').

12. A goods container according to claim 11, wherein said tube (30) is a front tubular upright (30) of a tubular frame of a lateral wall (4) of the goods container and said fitting (31) is a latching hook (19) or a hinge pivot (31) for a front gate (6) of the goods container.

13. A goods container according to claim 11 or 12, wherein said bracket (24') is substantially U-shaped and an elongate member (28) extends through the limbs (25 and 26) of the bracket (24') and through said fitting (31) and thereby retains said fitting (31) on said bracket (24').

## Patentansprüche

1. Warenbehälter mit einer Stütze (20) und mehreren Regalböden (8), die aus Kunststoff bestehen und von der Stütze (20) gehalten sind, dadurch gekennzeichnet, daß die Regalböden (8) regelmäßig perforiert sind und der Kunststoff ein mit anderem Material verstärkter technischer Nichtschaum-Hochleistungskunststoff ist.

2. Warenbehälter nach Anspruch 1, bei dem das andere Material Stahl ist.

3. Warenbehälter nach Anspruch 2, bei dem das andere Material Glasfaser ist.

4. Warenbehälter nach einem der vorhergehenden Ansprüche, bei dem der Kunststoff Polypropylen oder Polyarylamid ist.

5. Warenbehälter nach einem der vorhergehenden Ansprüche, bei dem jeder Regalboden (8) zwischen einem vorstehenden Zustand und einem eingeschwenkten Zustand um eine Achse schwenkbar ist, ein elastisches Teil (36) an ein Ende jedes Regalbodens (8) axial angrenzt und zwischen dem Regalboden (8) und der Stütze (20) angeordnet ist, ein Vorsprung (43) von dem Regalboden (8) oder dem elastischem Teil (36) absteht, und in dem jeweils anderen Teil von Regalboden (8) und elastischem Teil (36) eine Vertiefung (42) zur Aufnahme des Vorsprungs (43) vorgesehen ist, um den Regalboden (8) in einem gewünschten Schwenkzustand in bezug auf die Stütze (20) zu positionieren, wobei das elastische Teil (36) imstande ist, axial elastisch nachzugeben, damit der Regalboden (8) aus dem gewünschten Zustand herausgeschwenkt werden kann.

6. Warenbehälter nach Anspruch 5, bei dem jedes elastische Teil (36) ein einstückiges plattenförmiges Teil aus elastischem Material ist.

7. Warenbehälter nach Anspruch 6, bei dem jedes elastische Teil (36) im Bereich seines Umfangs mit Abstandsvorsprüngen (38) ausgebildet ist, wodurch die Mitte des elastischen Teils (36), wie oben gesagt, elastisch nachgeben kann.

8. Warenbehälter nach einem der Ansprüche 5 bis 7, bei dem der Vorsprung (43) und die Vertiefung (42) für jeden Regalboden (8) in Form einer radialen Rippe (43) bzw. einer radialen Nut (42) vorliegen.

9. Warenbehälter nach einem der Ansprüche 5 bis 8, bei dem für jeden Regalboden (8) mehr als ein derartiger Vorsprung (43) und/oder mehr als eine derartige Vertiefung (42) ausgebildet sind, um mehrere Schwenkzustände des Regalbodens (8) in bezug auf die Stütze (20) zu definieren.

10. Warenbehälter nach einem der Ansprüche 5 bis 9, bei dem ein Drehzapfen (34) jedes Regalbodens (8) sich positionierend durch das elastische Teil (36) erstreckt und ein in ein Loch (40) in dem einen Teil (20) von Regalboden (8) und Stütze (20) hineinragender Positioniervorsprung (39) das elastische Teil (36) in bezug auf das eine Teil (20) von Regalboden (8) und Stütze (20) zusätzlich positioniert.

11. Warenbehälter nach einem der vorhergehenden Ansprüche und ferner mit einem Rahmenrohr (30), einem einstückigen Befestigungsbügel (24'), der in dem Rahmenrohr (30) an einer Öffnung durch die Wand des Rohres (30) sitzt und befestigt ist, und einem an dem Bügel (24') montierten Befestigungsteil (31).

12. Warenbehälter nach Anspruch 11, bei dem das Rohr (30) ein vorderer rohrförmiger Pfosten (30) eines Rohrrahmens einer Seitenwand (4) des Warenbehälters und das Befestigungsteil (31) ein Verriegelungshaken (19) oder ein Scharnierzapfen (31) für ein Vordergatter (6) des Warenbehälters ist.

13. Warenbehälter nach Anspruch 11 oder 12, bei dem der Bügel (24') im wesentlichen U-förmig ist und ein langgestrecktes Teil (28) sich durch die Schenkel (25 und 26) des Bügels (24') und das Befestigungsteil (31) erstreckt und dadurch das Befestigungsteil (31) an dem Bügel (24') hält.

## Revendications

1. Un conteneur pour marchandises comprenant un support (20) et un ensemble d'étagères (8) réalisées en matière plastique et portées par ledit support (20), caractérisé en ce que lesdites étagères (8) sont perforées de manière régulière et ladite matière plastique est une matière plastique industrielle non moussante de performance élevée renforcée avec une autre matière.

2. Un conteneur pour marchandises selon la revendication 1, dans lequel ladite autre matière est de l'acier.

3. Un conteneur pour marchandises selon la revendication 2, dans lequel ladite autre matière est de la fibre de verre.

4. Un conteneur pour marchandises selon une revendication précédente quelconque, dans lequel ladite matière plastique est du polypropylène ou du polyacrylamide.

5. Un conteneur pour marchandises selon une revendication précédente quelconque, dans lequel chaque étagère (8) peut tourner autour d'un axe entre un état saillant et un état rétracté, un élément élastique (36) est placé de manière axialement adjacente à une extrémité de chaque étagère (8) et disposé entre l'étagère (8) et ledit support (20), un élément en saillie (43) fait saillie de l'un (8) parmi l'étagère (8) et ledit élément élastique (36), et un évidement (42) est prévu dans l'autre (36) parmi l'étagère (8) et ledit élément élastique (36) afin de recevoir ledit élément en saillie (43) de manière à placer l'étagère (8) dans un état désiré de rotation par rapport audit support (20), l'élément élastique (36) présentant une élasticité axiale pour permettre à l'étagère (8) d'être tournée hors dudit état désiré.

6. Un conteneur pour marchandises selon la revendication 5, dans lequel chaque élément élastique (36) est un élément de plate-forme d'un seul tenan en matière élastique.

7. Un conteneur pour marchandises selon la revendication 6, dans lequel chaque élément élastique (36) présente, dans la zone de sa périphérie, des éléments en saillie d'espacement (38), de sorte que la partie médiane de l'élément élastique (36) peut présenter une élasticité axiale comme mentionné précédemment.

8. Un conteneur pour marchandises selon une quelconque des revendications 5 à 7, dans lequel, pour chaque étagère (8), la saillie (43) et l'évidement (42) sont respectivement sous la forme d'une nervure radiale (43) et d'une rainure radiale (42).

9. Un conteneur pour marchandises selon une quelconque des revendications 5 à 8, dans lequel, pour chaque étagère (8), plus d'un élément en saillie (43) et/ou évidement (42) de ce type sont formés de manière à définir un ensemble d'états de rotation de l'étagère (8) par rapport au support (20).

10. Un conteneur pour marchandises selon une quelconque des revendications 5 à 9, dans lequel un pivot (34) de chaque étagère (8) s'étend à travers l'élément élastique (36) et un élément en saillie de mise en place (39), s'étendant dans un trou (40) de l'un (20) parmi l'étagère (8) et ledit support (20), met en outre en place ledit élément élastique (36) par rapport à cet élément (20) parmi l'étagère (8) et ledit support (20).

11. Un conteneur pour marchandises selon une revendication précédente quelconque et comprenant en outre un tube de cadre (30), une console de montage d'un seul tenan (24') située dans ledit tube de cadre (30) et fixée dans celui-ci au niveau d'une ouverture à travers la paroi du tube (30), et un raccord (31) monté dans ladite console (24').

12. Un conteneur pour marchandises selon la revendication 11, dans lequel ledit tube (30) est un montant tubulaire antérieur (30) d'un cadre tubulaire d'une paroi latérale (4) du conteneur pour marchandises, et ledit raccord (31) est un crochet de verrouillage (19) ou un pivot d'articulation (31) pour une porte antérieure (6) du conteneur pour marchandises.

13. Un conteneur pour marchandises selon la revendication 11 ou 12, dans lequel ladite console (24') est sensiblement en forme de U et un élément allongé (28) s'étend à travers les branches (25 et 26) de la console (24') et à travers ledit raccord (31) et retient ainsi ledit raccord (31) sur ladite console (24').
